# FASCICULE DE BREVET EUROPEEN

(11) **EP 2 958 126 B1**
(45) Date de publication et mention de la délivrance du brevet: **30.08.2017**
(21) Numéro de dépôt: 15172314.5
(22) Date de dépôt: 16.06.2015
(51) Int. Cl.: H01H 37/76, H01C 7/12, H01H 37/08

(54) **INDICATEUR DE DÉCONNEXION D'UN COMPOSANT ACTIF DE DISPOSITIF DE PROTECTION D'UNE INSTALLATION ÉLECTRIQUE**
ABSCHALTANZEIGE EINER AKTIVEN KOMPONENTE EINER SCHUTZVORRICHTUNG EINER ELEKTRISCHEN ANLAGE
INDICATOR FOR DISCONNECTING AN ACTIVE COMPONENT OF A DEVICE FOR PROTECTING AN ELECTRICAL INSTALLATION

(30) Priorité: 20.06.2014 FR 1455681
(43) Date de publication de la demande: 23.12.2015
(73) Titulaire: ABB Schweiz AG, 5400 Baden (CH)
(72) Inventeur: GAUTIER, Boris, 65100 LOURDES (FR); BRESCON, Stéphane, 65200 BAGNERES DE BIGORRE (FR)
(74) Mandataire: Verriest, Philippe

(56) Documents cités:
- WO-A1-2008/010410
- CN-A- 101 834 434

## Description

La présente invention se rapporte à un dispositif de protection d'installation électrique comprenant un système de déconnexion d'un composant actif du dispositif avec indicateur visuel.

Une varistance est un composant actif d'un dispositif de protection d'une installation électrique, comme un parafoudre. Les varistances, ou résistances variables, actuelles comprennent un bloc de céramique par exemple composé d'oxyde de zinc assemblé par frittage et ont une caractéristique tension/courant non linéaire : au-delà d'un certain seuil de tension, l'impédance de la varistance chute pour permettre l'évacuation du courant consécutif à une surtension. Quand la tension revient à son niveau normal, l'impédance de la varistance reprend sa valeur à l'état de veille.

Dans un parafoudre, une ou plusieurs varistances sont généralement disposées dans une cartouche comprenant également élément de connexion, permettant de les relier électriquement à l'installation électrique à protéger.

Pour éviter les dommages dus aux dysfonctionnements et aux phénomènes d'échauffement anormaux des varistances, celles-ci doivent être munies d'un système de déconnexion. Il en découle une nécessité d'équiper les parafoudres de systèmes d'indication de l'état connecté ou déconnecté des varistances.

Il est connu d'utiliser des systèmes d'indication comprenant des voyants électriques montés en parallèle sur les varistances. L'utilisation de voyants électriques entraîne une consommation d'énergie permanente.

Il est également connu d'utiliser des systèmes d'indication mécaniques nécessitant l'utilisation de plusieurs pièces coûteuses et encombrantes qui induisent un risque de blocage du mécanisme.

En particulier, le document CN 101 834 434 A divulgue un dispositif de protection selon le préambule de la revendication 1. La présente invention a pour objectif de résoudre tout ou partie des inconvénients mentionnés ci-dessus.

Á cet effet, la présente invention concerne un dispositif de protection selon la revendication 1. Selon un aspect de l'invention, il n'y a pas de mouvement relatif entre l'indicateur de déconnexion et la partie mobile de l'élément de connexion.

Grâce aux dispositions selon l'invention, l'indicateur de l'état connecté ou déconnecté du composant actif est intégré au système de déconnexion et ainsi présente un encombrement réduit. De plus, aucun frottement n'est occasionné par le passage de la partie mobile de l'élément de connexion, et donc de l'indicateur de déconnexion, de la position de contact à la position fermée. Ainsi, l'usure des matériaux ainsi que les risques de blocage dus à ce mouvement sont limités. Enfin, ce type d'indicateur n'engendre aucune consommation d'énergie additionnelle.

Suivant des caractéristiques optionnelles du dispositif de protection d'une installation électrique :
- la portion de montage comprend une partie mobile agencée pour accueillir la partie mobile de l'élément de connexion ;
- l'indicateur de déconnexion est formé d'une pièce unique avec la portion de montage, l'indicateur de déconnexion est ainsi solidaire à la portion de montage, et se trouve donc solidaire en mouvement de l'élément de connexion ;
- l'élément de connexion est déformable ;
- un élément de rappel permet le passage de la partie mobile de l'élément de connexion de la position de contact à la position ouverte ;
- l'élément de rappel est un ressort ;
- en position de contact, la partie mobile de l'élément de connexion est fixé mécaniquement à la seconde borne de la varistance ;
- la fixation mécanique de la partie mobile de l'élément de connexion à la seconde borne de la varistance est assurée par brasage d'un élément de retenue ;
- l'élément de retenue est apte à fondre à partir d'une température de seuil, la température de seuil correspond à une température d'échauffement anormal de la varistance ;
- lorsque la varistance atteint la température seuil, l'élément de retenue fond et l'élément de rappel fait passer la partie mobile de l'élément de connexion de la position de contact à la position ouverte ;
- le corps isolant comprend une portion de visualisation disposée en regard de l'indicateur de déconnexion, permettant à l'opérateur de connaître la position de la partie mobile de l'élément de connexion ;
- l'indicateur de déconnexion comprend une première portion visible depuis l'extérieur du corps isolant dans la première configuration et une seconde portion visible depuis l'extérieur du corps isolant dans la seconde configuration, la première portion et la seconde portion étant visuellement distinctes ;
- la première portion et la seconde portion de l'indicateur de déconnexion sont de couleurs différentes, permettant à l'opérateur de distinguer la position de contact de la position ouverte ;
- la première portion de l'indicateur de déconnexion se trouve au niveau de la portion de visualisation dans la première configuration et la seconde portion de l'indicateur de déconnexion se trouve au niveau de la portion de visualisation dans la deuxième configuration.
- la portion de visualisation est une ouverture dans le corps isolant ;
- la portion de visualisation est une portion transparente du corps isolant ;
- l'élément de connexion est relié électriquement à la seconde portion de circuit électrique ;
- l'élément de connexion comprend une partie fixe au niveau de laquelle il est relié à la seconde portion de circuit électrique ;
- le corps isolant comprend une face arrière destinée à être montée sur un support et une face avant, opposée à la face arrière, les faces avant et arrière définissant entre elles un logement intérieur selon la première direction d'extension ;
- la varistance et le système de déconnexion étant disposés dans le logement intérieur du corps isolant, alignés selon une deuxième direction d'extension du logement intérieur, transversale à la première direction d'extension, on entend par une direction d'extension transversale, une direction d'extension orientée selon un angle compris entre 60° et 120° par rapport à la première direction d'extension ;
- de préférence, la deuxième direction d'extension est orientée selon un angle compris entre 70° et 110° par rapport à la première direction d'extension ;
- de préférence, la deuxième direction d'extension est orientée selon un angle compris entre 80° et 100° par rapport à la première direction d'extension ;
- de préférence, la deuxième direction d'extension est orientée perpendiculairement par rapport à la première direction d'extension ;
- la varistance et le système de déconnexion sont disposés dans le logement intérieur du corps isolant alignés selon la deuxième direction d'extension ;
- une face du corps isolant délimite le corps isolant dans la seconde direction d'extension et est destinée à former une face inférieure du dispositif de protection lorsque celui-ci est disposé sur un support sensiblement vertical, de façon à ce que la deuxième direction d'extension soit sensiblement verticale ;
- la première portion de circuit électrique et la deuxième portion de circuit électrique s'étendent selon la deuxième direction d'extension dans le logement intérieur du corps isolant ;
- la première portion de circuit électrique et la seconde portion de circuit électrique s'étendent en regard de la face arrière du corps isolant ;
- la face inférieure comprend une première ouverture dans laquelle le premier élément de raccordement est apte à s'insérer, et une seconde ouverture dans laquelle le second élément de raccordement est apte à s'insérer;
- le corps isolant comprend une face supérieure pleine, opposée à la face inférieure ;
- le corps isolant comprend deux faces latérales pleines, opposées l'une à l'autre ;
- le corps isolant est sensiblement parallélépipédique ;
- le corps isolant est formé de deux demi-coques rapportées l'une sur l'autre ;
- une zone de contact des demi-coques traverse la face supérieure de façon étanche ;
- les premier et second éléments de raccordement sont adjacents l'un à l'autre ;
- les premier et second éléments de raccordement correspondent, indifféremment à la phase et au neutre ;
- les premier et second éléments conducteurs sont des fils conducteurs à vis ;
- les premier et second éléments conducteurs sont des bornes de sortie à vis ;
- le dispositif de protection comprend un troisième élément de raccordement ;
- le troisième élément de raccordement correspond au neutre ;
- le troisième élément de raccordement comprend un élément conducteur;
- l'élément conducteur est un fil conducteur à vis ;
- l'élément conducteur est une borne de sortie à vis ;
- la face inférieure du corps isolant comprend une troisième ouverture dans laquelle est apte à s'insérer le troisième élément de raccordement ;
- les premier, deuxième et troisième éléments de raccordement sont disposés sur une même face du corps isolant ;
- la varistance comprend une première patte de raccordement électrique, une seconde patte de raccordement électrique et un corps actif comprenant une première face et une deuxième face ;
- la première face et la deuxième face de la varistance sont opposées ;
- les première et deuxième pattes de raccordement comprennent chacune une piste conductrice reliée électriquement au corps actif de la varistance ;
- la première patte de raccordement comprend une première portion s'étendant au regard de la première face du corps actif et une deuxième portion reliée électriquement à la première portion du circuit électrique ;
- la seconde patte de raccordement électrique comprend une première portion s'étendant au regard de la deuxième face du corps actif, reliée électriquement à l'élément de connexion relié électriquement à la seconde portion du circuit électrique, et une deuxième portion à distance de la première portion et de la seconde portion de circuit électrique ;
- le dispositif comprend un élément de montage électriquement isolant comprenant la portion de montage comprenant un logement de réception de l'élément de connexion et une deuxième portion de montage comprenant un logement de réception de la varistance ;
- la deuxième portion de montage est formée d'une même pièce avec la portion de montage comprenant un logement de réception de l'élément de connexion ;
- l'élément de rappel est disposé entre la portion de montage accueillant l'élément de connexion et la deuxième portion de montage ;
- la deuxième portion de montage comprend un logement de réception de la deuxième portion de la seconde patte de raccordement ;
- le corps actif de la varistance, la première patte de raccordement de raccordement et la seconde patte de raccordement sont couverts d'un revêtement électriquement isolant ;
- le revêtement isolant comprend une première ouverture au niveau de la deuxième portion de la première patte de raccordement, et une deuxième ouverture au niveau de la deuxième portion de la seconde patte de raccordement ;
- la deuxième portion de la première patte de raccordement est reliée électriquement à la première portion de circuit électrique au niveau de la première ouverture, qui constitue la première borne de la varistance ;
- la deuxième portion de la première patte de raccordement s'étend selon la première direction d'extension ;
- la deuxième portion de la seconde patte de raccordement s'étend selon la deuxième direction d'extension, transversale à la première direction d'extension ;
- le revêtement comprend une troisième ouverture au niveau de la première portion de la seconde patte de raccordement ;
- la première portion de la seconde patte de raccordement est reliée au système de déconnexion au niveau de la troisième ouverture, qui constitue la seconde borne de la varistance ;
- la deuxième portion de la première patte de raccordement s'étend selon la première direction d'extension ;
- la deuxième portion de la seconde patte de raccordement s'étend selon la deuxième direction d'extension.

D'autres caractéristiques et avantages de la présente invention apparaîtront à la lumière de la description qui va suivre et à l'examen des figures ci-annexées, dans lesquelles :
- la figure 1 représente un dispositif de protection d'une installation électrique en vue écorchée ;
- la figure 2 représente les éléments disposés dans le logement intérieur du corps isolant ;
- la figure 3 représente une varistance et un système de déconnexion en position de contact ;
- la figure 4 représente une varistance et un système de déconnexion en position ouverte.

Sur l'ensemble de ces figures, des références identiques ou analogues désignent des organes ou ensemble d'organes identiques ou analogues.

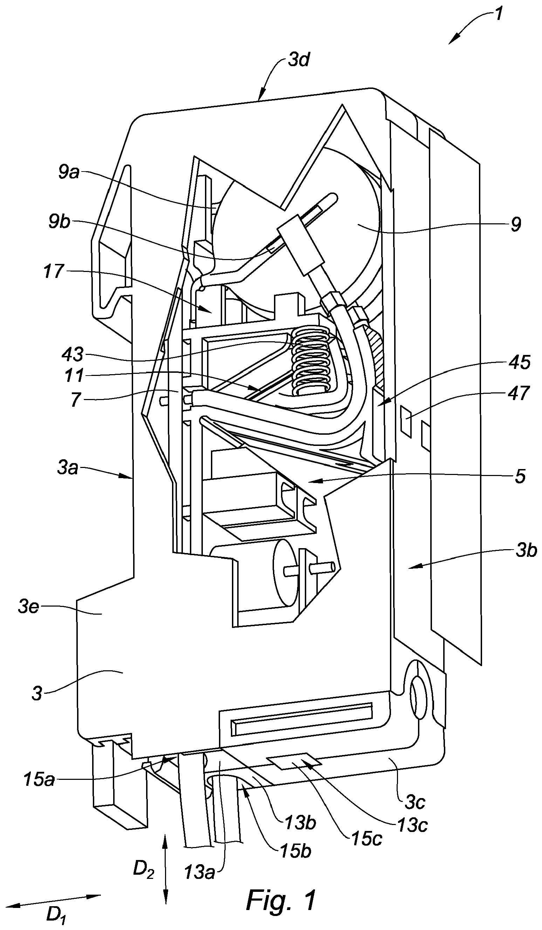

La figure 1 représente un dispositif de protection 1 d'une installation électrique destiné à être rapporté sur un support (non représenté), par exemple un rail de type DIN, au sein d'un boîtier électrique selon une direction sensiblement verticale. Le dispositif de protection 1 comprend un corps isolant 3 électriquement, sensiblement parallélépipédique. Le corps isolant 3 comprend une face arrière 3a destinée à être fixée sur le support. Le corps isolant 3 comprend en outre une face avant 3b opposée à la face arrière 3a, accessible visuellement lorsque le dispositif est rapporté sur le support. Les faces avant 3b et arrière 3a définissent entre elles un logement intérieur 5 selon une direction d'extension D1. Le corps isolant comprend une face 3c, destinée à être la face inférieure du corps isolant 3 lorsque le dispositif de protection 1 est rapporté sur le support, c'est-à-dire en fonctionnement. Une face 3d, pleine et opposée à la face 3c est destinée à être la face supérieure du corps isolant 3 lorsque le dispositif de protection 1 est rapporté sur le support. Les faces 3c et 3d définissent entre elles une deuxième direction d'extension D2. La deuxième direction d'extension D2 est sensiblement perpendiculaire à la première direction d'extension D1. Le corps isolant 3 comprend en outre des faces 3e, pleines et opposées l'une à l'autre.

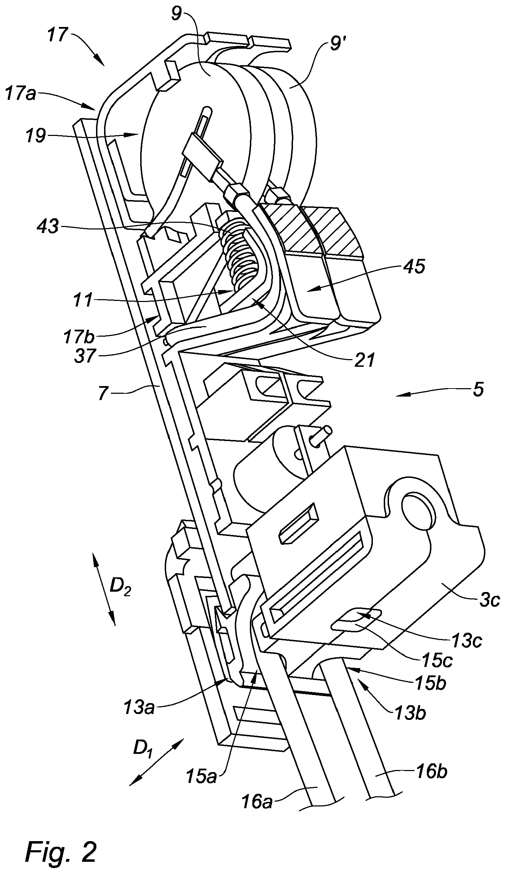

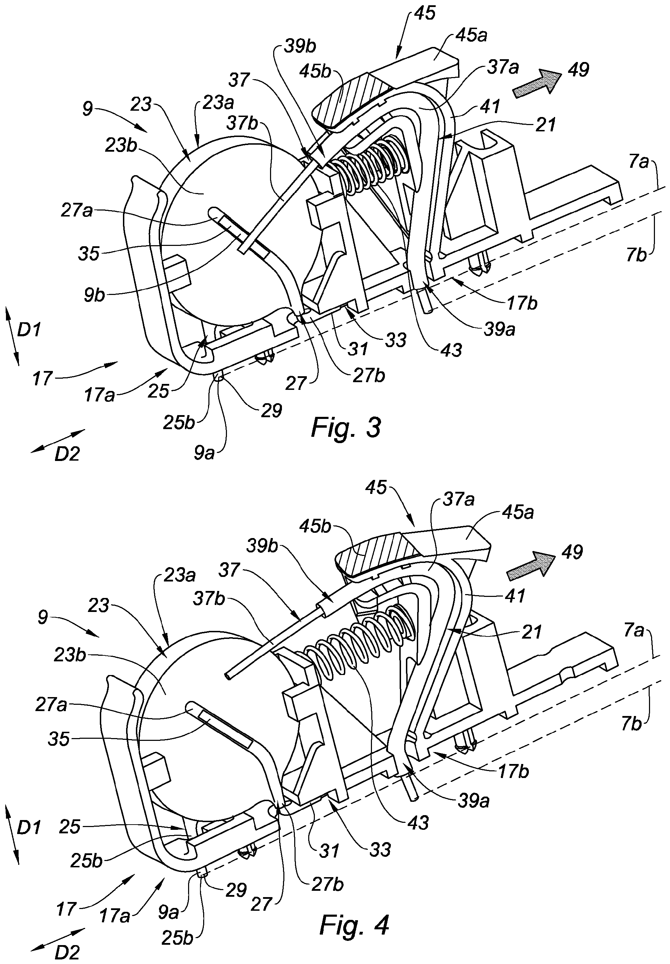

Comme représenté en figure 2, le logement intérieur 5 comprend un circuit imprimé 7 comportant deux portions de circuit électrique ou pistes conductrices 7a, 7b, représentées sur les figures 3 et 4. Le logement intérieur 5 comprend en outre un composant actif, ici une varistance 9 reliée électriquement à un système de déconnexion 11. Une première piste conductrice 7a est reliée électriquement à la varistance 9 et une seconde piste conductrice 7b est reliée électriquement au système de déconnexion 11. Les pistes conductrices 7a, 7b sont en outre chacune reliées électriquement à un élément de raccordement 13a, 13b et 13c du dispositif de protection 1 au circuit principal de l'installation électrique à protéger. Le logement intérieur 5 comprend ici, une seconde varistance 9' couplée à un second système de déconnexion (non représenté), ayant une disposition et un fonctionnement identique à la varistance 9 couplée au système de déconnexion 11.

La varistance 9 et le système de déconnexion 11 sont disposés de manière alignée dans le logement intérieur 5 selon la deuxième direction d'extension D2 du logement intérieur 5. Le circuit imprimé 7 est orienté selon la deuxième direction d'extension D2. Le circuit imprimé 7 longent la varistance 9 et le système de déconnexion 11. Ainsi, la liaison de la varistance 9 et du système de déconnexion 11 aux pistes conductrices 7a, 7b est facilitée.

Les éléments de raccordement 13a, 13b sont adjacents l'un à l'autre. La face 3c comprend une première ouverture d'insertion 15a dans laquelle l'élément de raccordement 13a est apte à s'insérer. L'élément de raccordement 13a comprend un élément conducteur, ici un fil conducteur 16a à vis. La face 3c comprend en outre une seconde ouverture d'insertion 15b dans laquelle l'élément de raccordement 13b est apte à s'insérer. L'élément de raccordement 13b comprend un élément conducteur, ici un fil conducteur 16b à vis. Les fils conducteurs 16a et 16b sont attribués à la phase et au neutre. La face 3c comprend en outre une ouverture 15c, dans laquelle est apte à s'insérer l'élément de raccordement 13c se présentant ici sous la forme d'une borne de sortie à vis, attribuée à la terre. Les fils conducteurs 16a et 16b, et la borne de sortie sont raccordés ensuite au circuit imprimé 3. Le raccordement des fils conducteurs 16a et 16b et de la borne de sortie est, par exemple, réalisé par soudure sur le circuit imprimé 3, au niveau des pistes conductrices. Les éléments de raccordement 13a, 13b, 13c pourraient également être constitués de

Ces ouvertures d'insertion 15a, 15b sont disposées sur la face 3c du corps isolant 3.

Le corps isolant 3 comprend deux demi-coques rapportées l'une sur l'autre au niveau d'une zone de contact. La zone de contact traverse la face 3d de façon étanche. Ainsi, en cas d'intempéries ou de condensation, l'eau s'écoule principalement sur les faces supérieure 3d et latérales 3a, 3b, 3e du corps isolant 3. Le risque d'infiltration d'eau au sein du dispositif de protection 1 est ainsi limité.

Le logement intérieur 5 du corps isolant 3 comprend en outre un élément de montage 17 électriquement isolant comportant une première portion de montage 17a et une deuxième portion de montage 17b, formées d'une même pièce. La première portion de montage 17a comprend un logement de réception 19 agencé pour accueillir la varistance 9. La deuxième portion de montage 17b comprend un logement de réception 21 agencé pour accueillir le système de déconnexion 11. L'élément de montage 17 permet ainsi l'isolation de la varistance 9, du système de déconnexion 11 et du circuit imprimé 7 les uns par rapport aux autres. Il est ainsi possible de rapprocher ces éléments les uns des autres sans risque de liaison électrique non désirée. Cet agencement des éléments au sein du logement intérieur 5 du corps isolant 3 permet ainsi de réduire l'encombrement du dispositif de protection 1.

Comme représenté également en figures 3 et 4, la varistance 9 comprend un corps actif comprenant un bloc de céramique, ici se présentant sous la forme d'une pastille 23. La varistance 9 comprend en outre une première patte de raccordement 25 et une deuxième patte de raccordement 27, reliées électriquement à la pastille 23. La pastille 23 comprend une première face principale 23a et une seconde face principale 23b, opposée à la première face principale 23a. Les pattes de raccordement 25, 27 comprennent chacune une portion s'étendant en regard d'une des faces principales de la pastille 23. Par exemple, la patte de raccordement 27 comprend une portion 27a disposée en regard de la seconde face principale 23b de la pastille 23. La pastille 23 et les pattes de raccordement 25, 27 sont couvertes d'un revêtement isolant. La patte de raccordement 25 comprend une portion d'extrémité 25b et la patte de raccordement 27 comprend une portion d'extrémité 27b. Le revêtement isolant comprend une première ouverture 29 au niveau de la portion d'extrémité 25b de la patte de raccordement 25. Le revêtement isolant comprend une deuxième ouverture 31 au niveau de la portion d'extrémité 27b de la patte de raccordement 27. Les portions d'extrémité 25b et 27b comprennent donc chacune une portion conductrice au niveau des ouvertures 29, 31 respectivement.

La portion conductrice de la patte de raccordement 25 constitue une première borne 9a de la varistance 9, qui permet de relier la varistance 9 à la première piste conductrice du circuit imprimé 7. La portion d'extrémité 25b s'étend selon la direction d'extension D1 et est sensiblement perpendiculaire au circuit imprimé 7, s'étendant selon la direction d'extension D2.

La portion conductrice de la patte de raccordement 27 est située à distance du circuit imprimé 7 et donc isolée directement de celui-ci. La portion d'extrémité 27b s'étend selon la direction D2, elle est ainsi sensiblement perpendiculaire à la portion d'extrémité 12b et sensiblement parallèle au circuit imprimé 7. La portion d'extrémité 27b est disposée dans un logement de réception 33 de la première portion de montage 17a.

Sur la seconde face principale 23b de la pastille 23, le revêtement isolant comprend une troisième ouverture 35 au niveau de la portion 27a de la patte de raccordement 27. La portion 27a comprend ainsi une portion conductrice au niveau de l'ouverture 35. La portion conductrice constitue une seconde borne 9b de la varistance 9 par laquelle la varistance 9 est apte à être reliée électriquement au système de déconnexion 11.

Ces dispositions permettent par exemple d'utiliser des varistances standards, issues du commerce.

Le système de déconnexion 11 comprend un élément de connexion, ici constitué par un fil conducteur 37. Selon un autre mode de réalisation de l'invention, l'élément de connexion pourrait par exemple être constitué d'une fine lame conductrice. Le fil conducteur 37 comprend une partie fixe 39a au niveau de laquelle il est relié électriquement à la deuxième piste conductrice 7b du circuit imprimé 7. Le fil conducteur 37 est donc apte à relier électriquement la seconde borne 9b de la varistance 9 au circuit imprimé 7. Une portion 37a du fil conducteur 37 est couverte par un revêtement isolant de protection. Le fil conducteur 37 comprend une partie mobile 39b. La deuxième portion de montage 17b comprend un logement de réception du fil conducteur 37. La deuxième portion de montage 17b est solidaire en mouvement du fil conducteur 37 et comprend une partie mobile 41, accueillant la partie mobile 39b du fil conducteur 37. Les parties mobiles 39b, 41 du fil conducteur 37 et de la deuxième portion de montage 17b sont déformables entre une position de contact et une position ouverte. Les phénomènes de frottement dus au passage des parties mobiles 39b, 41 du fil conducteur 37 et de la deuxième portion de montage 17b de la position de contact à la position ouverte sont donc limités.

Un élément de rappel élastique, ici un ressort 43 est disposé entre la deuxième portion de montage 17b et la première portion de montage 17a et est apte à mouvoir les parties mobiles 39b, 41 du fil conducteur 37 et de la deuxième portion de montage 17b.

Un indicateur de déconnexion 45 est formé d'une pièce unique avec l'élément de montage 17. L'indicateur de déconnexion 45 se situe au niveau de la partie mobile 41 de la deuxième portion de montage 17b. L'indicateur de déconnexion 45 est ainsi également mobile entre la position de contact et la position ouverte. L'indicateur de déconnexion 45 comprend deux portions visuellement distinctes : une première portion non colorée 45a et une seconde portion colorée 45b.

Le corps isolant 3 comprend une portion de visualisation au niveau de sa face avant 3a, ici une ouverture 47 permettant de visualiser depuis l'extérieur, l'une des portions 45a, 45b de l'indicateur de déconnexion 45 se trouvant en regard de l'ouverture 47.

Dans la position de contact représentée en figures 1, 2 et 3, le fil conducteur 37 est relié électriquement à la seconde borne 9b de la varistance 9. Le ressort 43 est comprimé et exerce une contrainte dans une direction indiquée par la flèche 49. Afin de maintenir la position des parties mobiles 39b, 41 du fil conducteur 37 et de la deuxième portion de montage 17b, un élément de retenue permet de fixer une portion d'extrémité 37b du fil conducteur 37 à la seconde borne 9b de la varistance 9. L'élément de retenue est une brasure. La brasure est choisie dans un matériau apte à fondre à partir d'une température de seuil, correspondant à une température de surchauffe anormale de la varistance 9. Comme représenté sur la figure 1, en position de contact, la portion non colorée 45a de l'indicateur de déconnexion 45 se situe au niveau de l'ouverture 47 du corps isolant 3. Cette portion non colorée 45a est visible depuis l'extérieur du corps isolant 3 et indique à un opérateur l'état connecté de la varistance 9.

Dans une position ouverte, représentée en figure 4, le fil conducteur 37 est isolé de la seconde borne 9b de la varistance 9. Le ressort 43 est relâché. La brasure est fondue. Dans cette position, la portion colorée 45b de l'indicateur de déconnexion 45 se situe au niveau de l'ouverture 47 du corps isolant 3. La portion colorée 45b est visible depuis l'extérieur du corps isolant 3 et indique à un opérateur l'état déconnecté de la varistance 9.

Lors d'un échauffement anormal de la varistance 9, la température intrinsèque de la varistance 9 atteint une température supérieure ou égale à la température de seuil à partir de laquelle la brasure est apte à fondre. Ainsi, la brasure fond, le ressort 43 se relâche et permet un déplacement selon la direction 49 des parties mobiles 39b, 41 du fil conducteur 37 et de la deuxième portion de montage 17b, ainsi que de l'indicateur de déconnexion 45. La portion colorée 45b de l'indicateur de déconnexion 45 se situe alors au niveau de l'ouverture 47 du corps isolant 3.

La seconde varistance 9' coopère de manière identique avec des éléments identiques.

Bien entendu, la présente invention ne se limite pas au mode de réalisation décrit et représenté, fourni à titre d'exemple illustratif et non limitatif.

Selon un mode de réalisation, l'indicateur de déconnexion 45 pourrait être autonome de la deuxième portion de montage 17b tout en restant solidaire en mouvement de la partie mobile 39b du fil conducteur 37.

Selon un mode de réalisation, la portion de visualisation du corps isolant 3 peut être constituée par une portion transparente, laissant ainsi apparaître l'indicateur de déconnexion 45 depuis l'extérieur, et garantissant l'étanchéité du dispositif.

Selon un mode de réalisation, les éléments de raccordement peuvent comprendre des bornes de sortie à vis pour la phase, le neutre et la terre.

Selon un mode de réalisation, les éléments de raccordement peuvent comprendre des fils conducteurs de sortie à vis pour la phase, le neutre et la terre.

## Revendications

1. Dispositif de protection d'une installation électrique comprenant un corps isolant (3) électriquement définissant un logement intérieur (5), le dispositif de protection (1) comprenant un premier élément de raccordement (13a) et un second élément de raccordement (13b) destinés à raccorder le dispositif de protection (1) à l'installation électrique et comprenant, au sein du logement intérieur (5) :
- une première portion de circuit électrique reliée au premier élément de raccordement (13a) et une seconde portion de circuit électrique reliée au second élément de raccordement (13b) ;
- une varistance (9) comprenant une première borne (9a) reliée électriquement à la première portion de circuit électrique et une seconde borne (9b) ;
- un système de déconnexion (11) de la varistance (9) comprenant un élément de connexion (37) agencé pour relier électriquement la seconde borne (9b) de la varistance (9) à la seconde portion de circuit électrique, l'élément de connexion (37) comprenant une partie mobile (39b) apte à occuper une position de contact dans laquelle l'élément de connexion (37) est relié électriquement à la seconde borne (9b) de la varistance (9), et une position ouverte dans laquelle l'élément de connexion (37) est électriquement isolé de la seconde borne (9b) de la varistance (9) ;
- un indicateur de déconnexion (45) ;
l'indicateur de déconnexion (45) étant solidaire en mouvement de la partie mobile (39b) de l'élément de connexion (37), et l'indicateur de déconnexion (45) et le corps isolant (3) étant agencés pour présenter une première configuration, qui correspond à la position de contact de la partie mobile (39b) de l'élément de connexion (37), et une seconde configuration, qui correspond à la position ouverte de la partie mobile (39b) de l'élément de connexion (37), le positionnement relatif de l'indicateur de déconnexion (45) par rapport au corps isolant (3) dans la première configuration étant visuellement distinct depuis l'extérieur du corps isolant (3) du positionnement relatif de l'indicateur de déconnexion (45) par rapport au corps isolant (3) dans la seconde configuration,
le dispositif de protection (1) comprenant une portion de montage (17b) électriquement isolante, la portion de montage (17b) comprenant un logement de réception (21) de l'élément de connexion (37) et solidaire en mouvement de l'élément de connexion (37),
**caractérisé en ce que** la portion de montage (17b) est déformable.

2. Dispositif de protection d'une installation électrique selon la revendication 1, dans lequel l'indicateur de déconnexion (45) est formé d'une pièce unique avec la portion de montage (17b).

3. Dispositif de protection d'une installation électrique selon l'une des revendications précédentes, dans lequel l'élément de connexion (37) est déformable.

4. Dispositif de protection d'une installation électrique selon l'une des revendications précédentes, dans lequel un élément de rappel (43) permet le passage de la partie mobile (39b) de l'élément de connexion (37) de la position de contact à la position ouverte.

5. Dispositif de protection d'une installation électrique selon l'une des revendications précédentes, dans lequel, en position de contact, la partie mobile (39b) de l'élément de connexion (37) est fixé mécaniquement à la seconde borne (9b) de la varistance (9).

6. Dispositif de protection d'une installation électrique selon la revendication 5, dans lequel la fixation mécanique de la partie mobile (39b) de l'élément de connexion (37) à la seconde borne (9b) de la varistance (9) est assurée par brasage d'un élément de retenue.

7. Dispositif de protection d'une installation électrique selon la revendication 6, dans lequel l'élément de retenue est apte à fondre à partir d'une température de seuil.

8. Dispositif de protection d'une installation électrique selon l'une des revendications précédentes, dans lequel le corps isolant (3) comprend une portion de visualisation (47) disposée en regard de l'indicateur de déconnexion (45).

9. Dispositif de protection d'une installation électrique selon l'une des revendications précédentes, dans lequel l'indicateur de déconnexion (45) comprend une première portion (45a) visible depuis l'extérieur du corps isolant (3) dans la première configuration et une seconde portion (45b) visible depuis l'extérieur du corps isolant (3) dans la seconde configuration, la première portion (45a) et la seconde portion (45b) étant visuellement distinctes.

10. Dispositif de protection d'une installation électrique selon l'une des revendications 8 ou 9, dans lequel la première portion (45a) de l'indicateur de déconnexion (45) se trouve au niveau de la portion de visualisation (47) dans la première configuration et la seconde portion (45b) de l'indicateur de déconnexion (45) se trouve au niveau de la portion de visualisation (47) dans la deuxième configuration.

11. Dispositif de protection d'une installation électrique selon l'une des revendications 8 à 10, dans laquelle la portion de visualisation (47) est une ouverture dans le corps isolant (3).

12. Dispositif de protection d'une installation électrique selon l'une des revendications 8 à 10, dans laquelle la portion de visualisation (47) est une portion transparente du corps isolant (3).

## Patentansprüche

1. Vorrichtung zum Schutz einer elektrischen Installation, umfassend einen elektrisch isolierenden Körper (3), der eine innere Aufnahme (5) definiert, wobei die Vorrichtung zum Schutz (1) ein erstes Verbindungselement (13a) und ein zweites Verbindungselement (13b) umfasst, die ausgerichtet sind, um die Vorrichtung zum Schutz (1) mit der elektrischen Installation zu verbinden, und umfassend, innerhalb der inneren Aufnahme (5):
- einen ersten Abschnitt einer elektrischen Schaltung, der mit dem ersten Verbindungselement (13a) verbunden ist, und einen zweiten Abschnitt einer elektrischen Schaltung, der mit dem zweiten Verbindungselement (13b) verbunden ist;
- einen Varistor (9), umfassend eine erste Klemme (9a), die elektrisch mit dem ersten Abschnitt einer elektrischen Schaltung verbunden ist, und eine zweite Klemme (9b);
- ein System zur Trennung (11) des Varistors (9), umfassend ein Anschlusselement (37), das angeordnet ist, um die zweite Klemme (9b) des Varistors (9) elektrisch an den zweiten Abschnitt einer elektrischen Schaltung zu verbinden, wobei das Anschlusselement (37) einen beweglichen Teil (39b) umfasst, der ausgelegt ist, um eine Kontaktposition einzunehmen, in der das Anschlusselement (37) elektrisch mit der zweiten Klemme (9b) des Varistors (9) verbunden ist, und eine offene Position, in der das Anschlusselement (37) elektrisch von der zweiten Klemme (9b) des Varistors (9) isoliert ist;
- eine Anzeige der Trennung (45);
wobei die Anzeige der Trennung (45) in Bewegung mit dem beweglichen Teil (39b) des Anschlusselements (37) fest verbunden ist, und die Anzeige der Trennung (45) und der isolierende Körper (3) angeordnet sind, um eine erste Konfiguration darzustellen, die der Kontaktposition des beweglichen Teils (39b) des Anschlusselements (37) entspricht, und eine zweite Konfiguration, die der offenen Position des beweglichen Teils (39b) des Anschlusselements (37) entspricht, wobei die relative Positionierung der Anzeige der Trennung (45) mit Bezug auf den isolierenden Körper (3) in der ersten Konfiguration visuell verschieden vom Äußeren des isolierenden Körpers (3) aus von der relativen Positionierung der Anzeige der Trennung (45) mit Bezug auf den isolierenden Körper (3) in der zweiten Konfiguration ist,
wobei die Vorrichtung zum Schutz (1) einen elektrisch isolierenden Montageabschnitt (17b) umfasst, wobei der Montageabschnitt (17b) eine Aufnahme zum Empfang (21) des Verbindungselements (37) umfasst und in Bewegung mit dem Anschlusselement (37) fest verbunden ist,
**dadurch gekennzeichnet, dass** der Montageabschnitt (17b) verformbar ist.

2. Vorrichtung zum Schutz einer elektrischen Installation nach Anspruch 1, wobei die Anzeige der Trennung (45) aus einem einzigen Stück mit dem Montageabschnitt (17b) gebildet ist.

3. Vorrichtung zum Schutz einer elektrischen Installation nach einem der vorhergehenden Ansprüche, wobei das Anschlusselement (37) verformbar ist.

4. Vorrichtung zum Schutz einer elektrischen Installation nach einem der vorhergehenden Ansprüche, wobei ein Rückstellelement (43) den Übergang des beweglichen Teils (39b) des Anschlusselements (37) aus der Kontaktposition in die offene Position ermöglicht.

5. Vorrichtung zum Schutz einer elektrischen Installation nach einem der vorhergehenden Ansprüche, wobei in der Kontaktposition der bewegliche Teil (39b) des Anschlusselements (37) mechanisch an die zweite Klemme (9b) des Varistors (9) fixiert ist.

6. Vorrichtung zum Schutz einer elektrischen Installation nach Anspruch 5, wobei die mechanische Fixierung des beweglichen Teils (39b) des Anschlusselements (37) an die zweite Klemme (9b) des Varistors (9) durch Lötung eines Rückhalteelements sichergestellt ist.

7. Vorrichtung zum Schutz einer elektrischen Installation nach Anspruch 6, wobei das Rückhalteelement ausgelegt ist, um ab einer Schwellentemperatur zu schmelzen.

8. Vorrichtung zum Schutz einer elektrischen Installation nach einem der vorhergehenden Ansprüche, wobei der isolierende Körper (3) einen Visulisierungsabschnitt (47) umfasst, der gegenüber der Anzeige der Trennung (45) angebracht ist.

9. Vorrichtung zum Schutz einer elektrischen Installation nach einem der vorhergehenden Ansprüche, wobei die Anzeige der Trennung (45) einen ersten Abschnitt (45a) umfasst, der vom Äußeren des isolierenden Körpers (3) in der ersten Konfiguration sichtbar ist, und einen zweiten Abschnitt (45b), der vom Äußeren des isolierenden Körpers (3) in der zweiten Konfiguration sichtbar ist, wobei der erste Abschnitt (45a) und der zweite Abschnitt (45b) visuell verschieden sind.

10. Vorrichtung zum Schutz einer elektrischen Installation nach einem der Ansprüche 8 oder 9, wobei sich der erste Abschnitt (45a) der Anzeige der Trennung (45) auf der Ebene des Visualisierungsabschnitts (47) in der ersten Konfiguration befindet und sich der zweite Abschnitt (45b) der Anzeige der Trennung (45) auf der Ebene des Visualisierungsabschnitts (47) in der zweiten Konfiguration befindet.

11. Vorrichtung zum Schutz einer elektrischen Installation nach einem der Ansprüche 8 bis 10, wobei der Visualisierungsabschnitt (47) eine Öffnung im isolierenden Körper (3) ist.

12. Vorrichtung zum Schutz einer elektrischen Installation nach einem der Ansprüche 8 bis 10, wobei der Visualisierungsabschnitt (47) ein transparenter Abschnitt des isolierenden Körpers (3) ist.

## Claims

1. A device for protecting an electrical facility comprising an electrically insulating body (3) defining an inner housing (5), the protection device (1) comprising a first connecting element (13a) and a second connecting element (13b) intended to connect the protection device (1) to the electrical facility and comprising, within the inner housing (5):
- a first electrical circuit portion linked to the first connecting element (13a) and a second electrical circuit portion linked to the second connecting element (13b);
- a varistor (9) comprising a first terminal (9a) linked electrically to the first electrical circuit portion and a second terminal (9b);
- a system (11) for disconnecting the varistor (9) comprising a connecting element (37) arranged to electrically link the second terminal (9b) of the varistor (9) to the second electrical circuit portion, the connecting element (37) comprising a movable part (39b) capable of occupying a contact position in which the connecting element (37) is electrically linked to the second terminal (9b) of the varistor (9), and an open position in which the connecting element (37) is electrically insulated from the second terminal (9b) of the varistor (9);
- a disconnecting indicator (45);
the disconnecting indicator (45) being secured in movement to the movable part (39b) of the connecting element (37), and the disconnecting indicator (45) and the insulating body (3) being arranged to have a first configuration, which corresponds to the contact position of the movable part (39b) of the connecting element (37), and a second configuration, which corresponds to the open position of the movable part (39b) of the connecting element (37), the relative positioning of the disconnecting indicator (45) with respect to the insulating body (3) in the first configuration being visually distinct from the outside of the insulating body (3) from the relative positioning of the disconnecting indicator (45) with respect to the insulating body (3) in the second configuration,
the protection device (1) comprising an electrically insulating mounting portion (17b), the mounting portion (17b) comprising a housing (21) for receiving the connecting element (37) and secured in movement to the connecting element (37),
**characterized in that** the mounting portion (17b) is deformable.

2. The device for protecting an electrical facility according to claim 1, wherein the disconnecting indicator (45) is formed of a single piece with the mounting portion (17b).

3. The device for protecting an electrical facility according to any of the preceding claims, wherein the connecting element (37) is deformable.

4. The device for protecting an electrical facility according to any of the preceding claims, wherein un return element (43) allows the mobile part (39b) of the connecting element (37) to pass from the contact position to the open position.

5. The device for protecting an electrical facility according to any of the preceding claims, wherein, in the contact position, the movable part (39b) of the connecting element (37) is mechanically attached to the second terminal (9b) of the varistor (9).

6. The device for protecting an electrical facility according to claim 5, wherein the mechanical attachment of the movable part (39b) of the connecting element (37) to the second terminal (9b) of the varistor (9) is ensured by brazing a retaining element.

7. The device for protecting an electrical facility according to claim 6, wherein the retaining element is capable of melting from a threshold temperature.

8. The device for protecting an electrical facility according to any of the preceding claims, wherein the insulating body (3) comprises a display portion (47) disposed facing the disconnecting indicator (45).

9. The device for protecting an electrical facility according to any of the preceding claims, wherein the disconnecting indicator (45) comprises a first portion (45a) visible from outside the insulating body (3) in the first configuration and a second portion (45b) visible from outside the insulating body (3) in the second configuration, the first portion (45a) and the second portion (45b) being visually distinct from each other.

10. The device for protecting an electrical facility according to any of claims 8 or 9, wherein the first portion (45a) of the disconnecting indicator (45) is located at the display portion (47) in the first configuration and the second portion (45b) of the disconnecting indicator (45) is located at the display portion (47) in the second configuration.

11. The device for protecting an electrical facility according to any of claims 8 to 10, wherein the display portion (47) is an opening in the insulating body (3).

12. The device for protecting an electrical facility according to any of claims 8 to 10, wherein the display portion (47) is a transparent portion of the insulating body (3).
